Europäisches Patentamt

European Patent Office

Office européen des brevets

(11) Veröffentlichungsnummer : **0 161 239**
**B1**

# (12) EUROPÄISCHE PATENTSCHRIFT

(45) Veröffentlichungstag der Patentschrift :
23.11.89

(51) Int. Cl.⁴ : **A 01 B 19/08**

(21) Anmeldenummer : 85890108.5

(22) Anmeldetag : 09.05.85

(54) Wiesenegge.

(30) Priorität : 11.05.84 AT 1548/84

(43) Veröffentlichungstag der Anmeldung :
13.11.85 Patentblatt 85/46

(45) Bekanntmachung des Hinweises auf die Patenterteilung : 23.11.89 Patentblatt 89/47

(84) Benannte Vertragsstaaten :
BE CH DE FR GB IT LI LU NL SE

(56) Entgegenhaltungen :
DE--A-- 2 651 651
DE--C-- 74 809
DE--C-- 335 072
FR--A-- 961 369
FR--A-- 1 200 829

(73) Patentinhaber : Wölfleder, Hubert, jun.
Nr. 59
A-4771 Sigharting (AT)

(72) Erfinder : Wölfleder, Hubert, jun.
Nr. 59
A-4771 Sigharting (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

## Beschreibung

Die Erfindung betrifft eine Wiesenegge mit einem an einem Zugbalken hängenden Hauptbearbeitungsteil, der eine Vielzahl gegeneinander versetzt angeordneter, untereinander beweglich und entlang in Fahrtrichtung verlaufender Wirkungslinien verbundener Eggenglieder umfaßt, wobei die Eggenglieder jeweils aus einem platten- oder rahmenförmigen Werkzeugträger und zahn- oder leistenförmigen Bearbeitungswerkzeugen bestehen und die Platten oder Rahmen der Werkzeugträger quer zur Fahrtrichtung liegende vordere und hintere Abwinkelungen oder Rahmenschenkel bilden.

Die für die Pflege von Wiesen und Weiden unentbehrliche Wiesenegge dient zum Einebnen von Erdhaufen, zum Verteilen und Verreiben von Düngemist, zum Entmoosen und Reinigen der Grasnarbe, zum Lüften des Bodens u. dgl., wobei in Abhängigkeit von den jeweiligen Gegebenheiten die eine oder andere Aufgabe in den Vordergrund tritt. Entsprechend der Vielseitigkeit der den Wieseneggen zukommenden Aufgaben gibt es auch bereits die verschiedenartigsten Eggenausführungen, doch sind die bekannten Wieseneggen immer nur für wenige Aufgabenbereiche wirklich geeignet. So gibt es Wieseneggen, deren Eggenglieder sternförmige Werkzeugträger mit eingesetzten Bearbeitungszähnen oder -zinken aufweisen und sich vor allem für stark gedüngte, wenig gepflegte Wiesen eignen, oder Wieseneggen mit kreis- oder tropfenförmigen Zerreiberringen als Eggenglieder für sauberere, nicht oder nur leicht gedüngte Wiesen.

Aus der DE-C-335 072 geht auch schon eine Wiesenegge als bekannt hervor, deren Eggenglieder aus zwei parallel angeordneten, durch zwei gekröpfte Bolzen starr verbundenen Messern bestehen und gegeneinander versetzt in in Fahrtrichtung verlaufenden Ketten eingebunden sind. Es entsteht zwar eine recht bewegliche, sich gut an Bodenunebenheiten anpassende Egge, doch lassen sich damit nur leichte Pflegearbeiten durchführen. Gemäß der FR-A-961 369 wurde weiters bereits eine Wiesenegge mit platten- oder rahmenförmigen Werkzeugträgern und zahn- und leistenförmigen Bearbeitungswerkzeugen vorgeschlagen, wobei allerdings jeweils zwei verschiedene, einerseits mit Leisten, andererseits mit Zähnen bestückte Eggenglieder erforderlich sind, die hintereinandergereiht werden und sich in ihrer Wirkung gegenseitig beeinträchtigen, wozu noch der erhebliche Herstellungsaufwand kommt.

Der Erfindung liegt daher die Aufgabe zugrunde, eine Wiesenegge der eingangs geschilderten Art zu schaffen, die sich bei bester Wirkung durch ihren breiten Anwendungsbereich auszeichnet und darüber hinaus eine robuste, dauerhafte und einfach herstellbare Konstruktion mit sich bringt.

Die Erfindung löst diese Aufgabe dadurch, daß von den Abwinkelungen oder Rahmenschenkeln jeweils die einen, vorzugsweise die vorderen Bearbeitungszähne aufnehmen und die anderen, vorzugsweise die hinteren selbst als Bearbeitungsleisten dienen. Diese Werkzeugträger erlauben den Einsatz von Bearbeitungszähnen und Bearbeitungsleisten in beliebiger Kombination pro Eggenglied, wodurch sich insgesamt ein großer Wirkungsbereich und ein ausgezeichneter Pflegeeffekt ergeben. Die Eggenglieder gestatten es nämlich, das Moos aufzukratzen und das zu vergleichmäßigende Material, wie Mist, Erdhaufen usw., zu lockern, welches Material durch die Zähne bzw. Zinken hindurchgelangt und anschließend sofort mit den als Zerreiber dienenden Leisten verteilt wird. Durch die Vielzahl der Eggenglieder kommt es dabei auch zu einem mehrfachen Aufkratzen, Lockern und Verreiben, so daß weitgehend unabhängig von der jeweiligen Beschaffenheit der Wiese die gewünschte Pflegewirkung gewährleistet ist. Darüber hinaus entsteht eine sehr einfache, verschleißfeste und leicht zu handhabende Eggenkonstruktion.

Eine besonders schonende Arbeitsweise bei guter Lüftungs- und Reinigungswirkung ergibt sich, wenn erfindungsgemäß die Abwinkelungen oder Schenkel und Zähne in Fahrtrichtung schräg nach hinten geneigt sind.

Weisen weiters die Platten oder Rahmen in den Eckbereichen Befestigungslöcher und in den Abwinkelungen oder Schenkeln Querschlitze zum Einstecken und unterseitigen Anschrauben von Verbindungsketten, -ringen u. dgl. auf, ist das wunschgemäße Zusammensetzen des Hauptbearbeitungsteiles der Wiesenegge schnell und problemlos durchführbar und die Eggenglieder können auch einfach ausgetauscht werden. Dabei entsteht eine verdrehsichere, lagefeste Verbindung zwischen Kette und Platte, die bei voller Beweglichkeit die Verschleißstellen von der Platte weg in die Kettenglieder verlegt, welche Kettenglieder durch Einsatzhärtung rationell widerstandsfähig und verschleißfest herzustellen sind und sich außerdem leicht wechseln lassen. Außerdem macht die unterseitige Befestigung der Ketten einen sehr tiefen Angriffspunkt der Zugkräfte an den Eggengliedern möglich, wodurch die Egge ruhig am Boden liegt und eine hohe Arbeitsgeschwindigkeit erlaubt.

In der Zeichnung ist der Erfindungsgegenstand in einem Ausführungsbeispiel schematisch dargestellt, und zwar zeigen

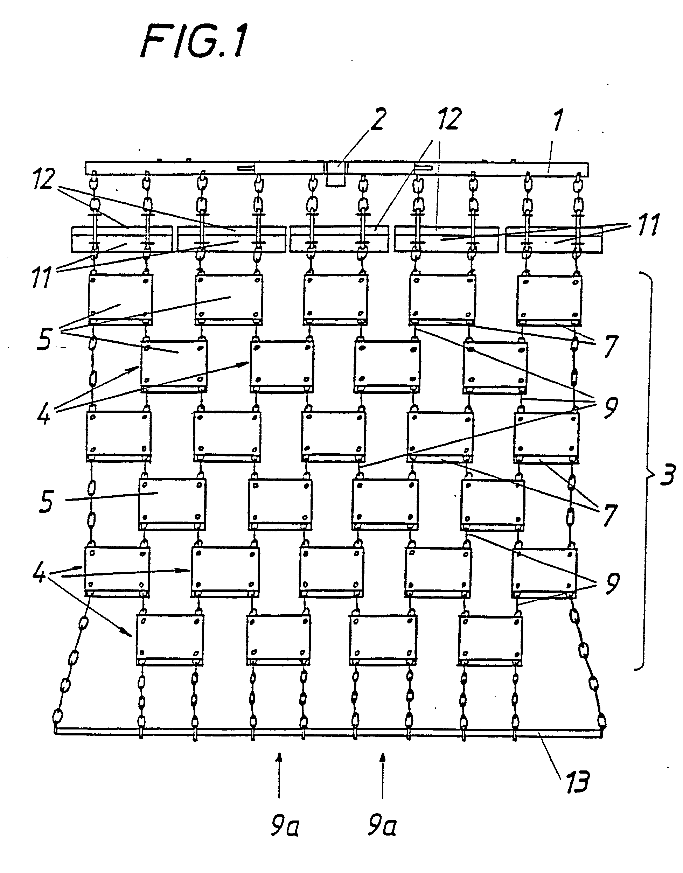

Fig. 1 und 2 eine erfindungsgemäße Wiesenegge in Draufsicht bzw. in Seitenansicht und

Fig. 3 und 4 jeweils ein Eggenglied im Schaubild unterschiedlichen Maßstabes.

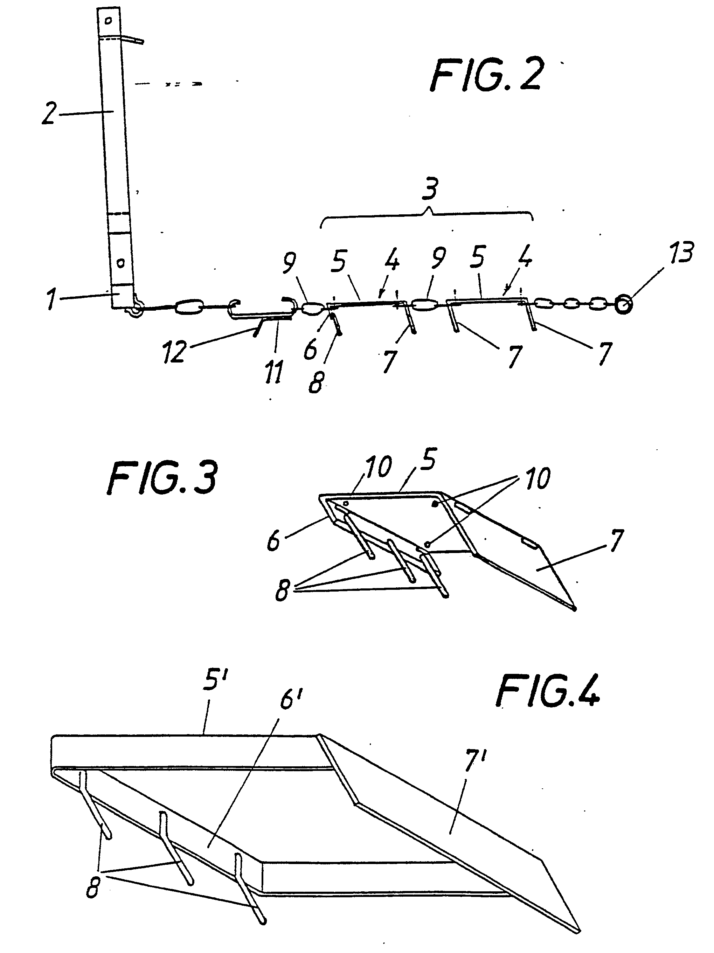

An einem Zugbalken 1, der über eine Anschlußvorrichtung 2 an einen nicht weiter dargestellten Traktor od. dgl. ankuppelbar ist, hängt der Hauptbearbeitungsteil 3 der Wiesenegge, der eine Vielzahl gegeneinander versetzt angeordneter Eggenglieder 4 umfaßt. Gemäß dem Ausführungsbeispiel nach Fig. 3 bildet jedes Eggenglied mit einer rechteckigen Platte 5, die an der Vorder- und Hinterseite Abwinkelungen 6, 7 besitzt, einen Werkzeugträger für Bearbeitungszähne und Bearbeitungsleisten. Es sind unterschiedlich breite Abwinkelungen vorgesehen, von denen die schmäleren Abwinkelungen 6 die Bearbeitungszähne 8 tragen und die breiteren Abwinkelungen 7 selbst die Bearbeitungsleisten ergeben. Die Abwinkelungen 6, 7 sind in Fahrtrichtung schräg nach hinten geneigt, um ein schonendes Arbeiten zu gewährleisten.

Wie in Fig. 4 angedeutet, können die Eggenglieder auch Rahmen 5' als Werkzeugträger aufweisen, wobei der vordere quer zur Fahrtrichtung liegende Schenkel 6' die Bearbeitungszähne 8 aufnimmt und der hintere Schenkel 7', der entsprechend breiter ist, eine Bearbeitungsleiste bildet.

Die einzelnen Eggenglieder 4 sind untereinander durch Kettenteile 9 verbunden, die parallel zur Fahrtrichtung liegen und an den Platten 5 durch Befestigungslöcher 10 in den Eckbereichen festgeschraubt sind. Den in Fahrtrichtung hintereinandergereihten Eggengliedern 4 ist reihenweise jeweils ein Profilschienenstück 11 vorgeordnet, welche quer zur Fahrtrichtung liegenden Profilschienenstücke 11 vorwärts geneigte Abscherleisten 12 bilden und bei guter Bodenanpassung eine Vorbearbeitung der zu eggenden Wiesen erlauben. Zur Nachbearbeitung kann an den Hauptbearbeitungsteil 3 der Wiesenegge eine Schleppstange 13 anschließen, wobei die Kettenteile 9 zur Verbindung der einzelnen Eggenglieder 4 geradlinig verlaufende Kettenstränge 9a bilden, die sich vom Zugbalken 1 über die Profilschienenstücke 11, die Eggenglieder 4 bis zur Schleppstange 13 erstrecken.

Die erfindungsgemäße Wiesenegge zeichnet sich bei vergleichsweise einfachem und billigem Aufbau durch beste Pflegewirkung und größten Einsatzbereich aus, wobei sich eine spezielle Anpassung an gegebene Verhältnisse durch die Zahl und Anordnung der verwendeten Eggenglieder 4, durch eine Bestückung dieser Eggenglieder 4 mit Bearbeitungszähnen 8 und/oder Bearbeitungsleisten 7 und durch das Vorordnen von Profilschienen 11 bzw. das Anschließen einer Schleppstange 13 mit wenigen Handgriffen erreichen läßt.

## Patentansprüche

1. Wiesenegge mit einem an einem Zugbalken (1) hängenden Hauptbearbeitungsteil (3), der eine Vielzahl gegeneinander versetzt angeordneter, untereinander beweglich und entlang in Fahrtrichtung verlaufender Wirkungslinien verbundener Eggenglieder (4) umfaßt, wobei die Eggenglieder (4) jeweils aus einem platten- oder rahmenförmigen Werkzeugträger (5, 5') und zahn- oder leistenförmigen Bearbeitungswerkzeugen (7, 7'; 8) bestehen und die Platten (5) oder Rahmen (5') der Werkzeugträger quer zur Fahrtrichtung liegende vordere und hintere Abwinkelungen (6, 7) oder Rahmenschenkel (6', 7') bilden, dadurch gekennzeichnet, daß von den Abwinkelungen (6, 7) oder Rahmenschenkeln (6', 7') jeweils die einen, vorzugsweise die vorderen (6; 6') Bearbeitungszähne (8) aufnehmen und die anderen, vorzugsweise die hinteren (7; 7') selbst als Bearbeitungsleisten dienen.

2. Wiesenegge nach Anspruch 1, dadurch gekennzeichnet, daß die Abwinkelungen (6, 7) bzw. Schenkel (6', 7') und Zähne (8) in Fahrtrichtung schräg nach hinten geneigt sind.

3. Wiesenegge nach Anspruch 1 oder 2, dadurch gekennzeichnet, daß die Platten (5) oder Rahmen (5') in den Eckbereichen Befestigungslöcher (10) und in den Abwinkelungen (6, 7) oder Schenkeln Querschlitze zum Einstecken und unterseitigen Anschrauben von Verbindungsketten, -ringen (9) u. dgl. aufweisen.

## Claims

1. A pasture harrow comprising a main treatment section (3) which is attached to a towbar (1) and which comprises a plurality of staggered, relatively movable harrow elements (4) which are connected along lines of action extending in the direction of travel, each harrow element (4) consisting of a tool carrier (5, 5') in the form of a plate or frame, and treatment tools (7, 7'; 8) in the form of teeth or strips, and the plates (5) or frames (5') of the tool carriers form front and rear bends (6, 7) or frame sides (6', 7') disposed transversely of the direction of travel, characterised in that one of each of the bends (6, 7) or frame sides (6', 7'), preferably the front one (6; 6'), accommodates treatment teeth (8) and the other, preferably the rear one (7; 7'), itself serves as a treatment strip.

2. A pasture harrow according to claim 1, characterised in that the bends (6, 7) or sides (6', 7') and teeth (8) are inclined obliquely rearwardly in the direction of travel.

3. A pasture harrow according to claim 1 or 2, characterised in that the plates (5) or frames (5') have fixing holes (10) in the corner zones and transverse slots in the bends (6, 7) or sides for the insertion and underside screwing on of connecting chains, connecting rings (9) and the like.

## Revendications

1. Herse pour prairies comprenant un élément de travail principal (3) suspendu à une barre traînée, ledit élément principal de travail comprenant une pluralité d'éléments de herse (4) déphasés l'un par rapport à l'autre, mobiles l'un par rapport à l'autre et reliés l'un à l'autre le long de lignes d'action allant en direction de course, les éléments de herse (4) étant formés d'un support d'outil (5, 5') en forme de plaques ou cadres, respectivement, et d'outils de travail (7, 7'; 8) en forme de dents ou lames, respectivement, et les plaques (5) ou cadres (5') des supports d'outil formant des parties pliées (6, 7) ou côtés de cadre (6', 7') antérieur et postérieur en direction de course, caractérisée en ce que des parties pliées (6, 7) ou côtés de cadre (6', 7') les uns, de préférence ceux de devant (6 ; 6') reçoivent les dents de travail (8) et les autres, de préférence ceux de derrière (7 ; 7') servent eux-mêmes comme baguettes de travail.

2. Herse de prairies selon la revendication 1, caractérisée en ce que les parties pliées (6, 7) et les côtés (6', 7'), respectivement, et les dents (8) sont inclinés vers l'arrière en direction de course.

3. Herse de prairies selon la revendication 1 ou 2, caractérisée en ce que les plaques (5) ou cadres (5') sont pourvus dans les zones de coin de trous (10) de fixation et dans les parties pliées (6, 7) ou côtés de cadre de fentes transversales pour insérer ou visser à partir du côté inférieur des chaînes, anneaux (9) ou autre élément de fixation.

# FIG.1

FIG.2

FIG.3

FIG.4